# EUROPEAN PATENT SPECIFICATION

(11) **EP 3 822 056 B1**
(45) Date of publication and mention of the grant of the patent: **08.05.2024**
(21) Application number: 19209713.7
(22) Date of filing: 18.11.2019
(51) Int. Cl.: B29C 44/28, B29C 44/02, B29C 44/06, B29C 44/24, B29C 44/34, B29C 35/08

(54) **SYSTEM FOR TREATMENT OF A MULTI-LAYERED CUSHIONING PRODUCT AND OPERATING METHOD FOR A SYSTEM FOR EXPANDING A MULTI-LAYERED CUSHIONING PRODUCT**
SYSTEM ZUR BEHANDLUNG EINES MEHRSCHICHTIGEN POLSTERPRODUKTS UND BETRIEBSVERFAHREN FÜR EIN SYSTEM ZUM EXPANDIEREN EINES MEHRSCHICHTIGEN POLSTERPRODUKTS
SYSTÈME POUR LE TRAITEMENT D'UN PRODUIT DE REMBOURRAGE MULTICOUCHE ET PROCÉDÉ POUR FAIRE FONCTIONNER UN SYSTÈME D'EXPANSION D'UN PRODUIT DE REMBOURRAGE MULTICOUCHE

(43) Date of publication of application: 19.05.2021
(73) Proprietor: Heraeus Noblelight Ltd., Cambridge CB4 0GQ (GB)
(72) Inventor: Bartley, Ian, CAMBRIDGE, Cambridgeshire CB4 0GQ (GB); Cooper, Simon, Leeds LS12 5XX (GB)
(74) Representative: Staudt, Armin Walter

(56) References cited:
- EP-A1- 1 464 688
- EP-A1- 3 165 860
- WO-A1-2019/040624
- JP-A- H11 302 610
- US-A- 3 734 813
- US-A- 5 759 324
- US-A- 6 114 008
- US-A1- 2005 136 251
- US-A1- 2009 321 508
- US-A1- 2016 116 211
- US-A1- 2016 332 344

## Description

### TECHNICAL FIELD

The invention relates to a system for treatment of a multi-layered cushioning product including at least one web layer and at least one expandable layer including a water-based heat-expandable adhesive (WBHEA). Furthermore, the invention relates to an arrangement comprising a multi-layered cushioning product including at least one web layer and at least one layer comprising a water-based heat-expandable adhesive (WBHEA) and a system. Also, the invention relates to an operating method for a system for expanding a multi-layered cushioning product including at least one web layer and at least one expandable layer including a water-based heat-expandable adhesive (WBHEA). Preferred cushioning products include envelopes, pillows or package bags for housing a fragile and/or perishable object during transport or mailing as a protective package.

### BACKGROUND

Traditional and widely used protective packaging materials include various padding or filler materials that are used for impact protection. For example, package bags lined with plastic bubblewrap (so called jiffy bags) or foamed inserts may be used for shipping fragile objects. Such padded wraps may be used to form a protective pouch or an envelope which permits a product to be shipped in a protective manner. Such protective products traditionally use closed cell extruded polystyrene foam to form a plastic "bubblewrap" material which relies on an air gap or bubble between plastic layers, to form a protective cushion. Because large portions of such traditional protective packaging materials are made out of plastic, they do not biodegrade and thus have a negative impact on the environment. Attempts to make more environmentally friendly protective wrap have drawbacks including increased shipping weight, non-uniformity in the protective layer and inconsistent protective quality. Further disadvantages include exceedingly large sizes of treatment systems and treatment times.

US 2017 0 130 399 A1 describes using an adhesive composition having cushion-like properties provided for use in protective packages and wraps. Such packages are formed with an air gap in an adhesive coating sandwiched between two substrates so as to provide insulation. The adhesive coating uses conventional oven heating for curing/coalescing the adhesive polymers, which means prolonged process time and large manufacturing space to allow for water evaporation.

In order to achieve shorter treatment times, WO 2019/040624 A1 suggests that microwave heating might offer the opportunity to control the level of moisture and air. WO 2019/040624 A1 describes that the protective wrap or package may have one or more webs coated with a pattern of a water-based heat-expandable adhesive (WBHEA) comprising a water-based polymer and a plurality of heat-expandable microspheres. By exposing said WBHEA to radio frequency (RF) or microwave (MW) radiation it is expanded to form a protective padded wrap. However, RF-heaters have a number of practical drawbacks: RF-heating is energetically very ineffective, incurring very high operating costs, and indirectly acting detrimental to the overall economic balance of cushioning products, as the large energy consumption is correlated with equally large carbon-dioxide-emissions. RF- and MW- heating have been shown to be generally unfit for use in close proximity with manual operators due to environment, health and safety (EHS)-concerns. An overexposure to radiofrequency (RF) or microwave (MW) is known to pose health risks. Prolonged exposure to RF/MW-fields may cause unhealthy increase of body temperature, and even damage or burns to internal tissue. Furthermore, RF/MW-fields interfere with metallic implants such as cardiac pacemakers, and with equipment sensitive to RF/MW radiation, such as a switchboards or control panels so that those cannot be installed near sources of RF/MW radiation as they may be damaged. Therefore, only specifically qualified personal can be tasked with using RF/MW-heater and even those need to use specifically shielded and remotely operated devices. The known RF-/MW- heating systems are therefore generally considered as being too large and too complicated.

US 5 759 324 A discloses a process for bonding by adhesion of a cover onto a shaped padding. For heating the padding and the adhesion layer a radiator module is used, comprising infrared lamps or tubes having an operative temperature of 1,300 °C. The infrared lamps are positioned at a distance of 50 mm to 200 mm from the surface of the foam padding.

WO 2019/040624 A1 discloses a system for treatment of a cushioning product with one or more webs coated with a pattern of WBHEA. The system comprises a uses a radiator module which is used for drying ink printed on a web substrate such as a bar code, company logo, advertisement. In the heating station RF energy is used to effect the heating, expanding and drying of the WBHEA layer. The multi-layered cushioning product does not exist before passing the finishing station.

US 2016/332344 A1 describes a system for the production of prefoamed poly(meth)acrylamide particles by infrared radiation emitted by an IR source having an operative temperature from 780 K to 1.800 K.

EP 1 464 688 A1 discloses an operating method for a system for expanding a multi-layered cushioning product including at least one web layer and at least one expandable layer including a water-based, heat-peelable pressure-sensitive adhesive layer with heat expandable microspheres, wherein the cushioning product is irradiated by an infrared radiator module including at least one emitter, such as a filament, panel or the like, emitting infrared radiation, wherein the cushioning product is provided with no less than 10 mJ/cm² and no more than 50 mJ/cm², particularly 17 mJ/cm² to 25 mJ/cm², for causing expansion of the water-based heat-expandable adhesive in the expandable layer.

US 2005/136251 A1 discloses a heat-peelable pressure-sensitive adhesive sheet in which an adhesive layer containing a foaming agent or an expanding agent such as heat-expandable microcapsules is formed on a substrate. The heat treatment in peeling the heat-peelable pressure-sensitive adhesive sheet from the semiconductor wafer can be conducted by an appropriate heating unit such as a near infrared lamp. The general heat treatment conditions are that the temperature is from 100 to 250° C. and the time is from 5 to 90 seconds (hot plate or the like) or from 5 to 15 minutes (hot air dryer or the like).

US 3 734 813 A describes a high frequency weldable material for use in the manufacture of a composite web containing said weldable material, said weldable material comprising a thin, web-like structure which is permeable to gas, vapor and liquid. For the fixation and any sintering of the particles, near-by heat generators are required which can induce a tackiness to such a degree that the particles are sufficiently transferred to the support. An endless conveyor belt is provided which removes the material provided with plastics material from the conveying and distributing means.

US 6 114 008 A discloses a floor covering having a natural wood, stone, marble, granite, or brick appearance, comprising a backing layer and a foam layer located on said backing layer and having a chemically embossed portion, a design layer located on said foam layer and a wear layer located on top of said design layer. Once the wear layer is applied to the top of the foamable layer, the wear layer is cured. This curing can be accomplished by subjecting the wear layer along with the foamable layer and substrate to a sufficient temperature, e.g., by heating, to cure the wear layer in a multi-zone gas-fired hot air oven.

US 2009/321508 A1 discloses a method of making a double-wall container, comprising: providing a first substrate to form an inner wall of a container and applying an insulating material to the inner wall of the first substrate. The insulating material may be activated by using infrared (IR), air, convection or conductive heating methods.

JP H11 302610 A discloses a thermally releasable pressure-sensitive adhesive sheet prepared by forming a thermally expandable layer containing thermally expandable microspheres on the surface of a support, wherein the thermally expandable layer is endowed with ultraviolet absorptivity. Ultraviolet absorptivity can be imparted to the above layer, for example, by adding a black colorant. A desirable substance which can impart ultraviolet absorptivity includes a nearinfrared absorbing colorant.

EP 3 165 860 A1 discloses a method for drying parts that are supported on a conveyor belt using infrared r carbon fibre lamps which emit infrared radiation with a wavelength of between 2.2 and 2.8 microns and a power density of between 30 and 35 kw/m².

US 2016/0116211 A1 discloses a method for operating a device for modifying a substrate with an irradiating unit. The irradiating unit comprises multiple cylindrical infrared emitters arranged parallel to one another. The method includes operating each infrared emitter at a desired operating output power and selecting the desired operating output power of each infrared emitter individually.

It is an object of the invention to overcome the disadvantages of the prior art and particularly to provide a system, arrangement and/or operating method for quickly, efficiently and safely expanding a multi-layer cushioning product including at least one web layer and at least one layer comprising a water-based heat-expandable adhesive. This object is solved by the subject matter of the independent claims.

### SUMMARY

A first aspect of the invention relates to a treatment of a multi-layered cushioning product including at least one web layer and at least one expandable layer including water-based heat-expandable adhesive (WBHEA).

Multi-layered cushioning product may be provided as individual items, such as pouches, envelopes or the like. Alternatively, multi-layered cushioning products may be provided as an endless or semi-endless web material, such as a wound up reel of non-expanded multi-layered cushioning product. One or more items of multi-layered cushioning product may be provided in a discontinuous, stepwise and/or sequential manner to the system. A web of multi-layered cushioning product can be fed to the system for irradiation treatment continuously. The width (extension in the X-direction) of the cushioning product(s) may be less than 1 m, in particular less than 80 cm, more particular less than 40 cm. Items of multi-layered cushioning product may have a width and a length dimension no more than one order of magnitude (factor ten) different from one another. For example, an item of multi-layered cushioning product may have a width no less than 10%, preferably no less than 50%, and/or no more than 500%, preferably no more than 300% as large as the length of the item of multi-layers cushioning product. Items of multi-layered cushioning product is may be sheet-like. The width of the multi-layered cushioning product (be it an item or individual item or web), is preferably less than the width of the at least one radiator module and/or less than the width of the conveyor. The widthwise dimension of the conveyor and/or radiator module may be defined in the direction across from a conveying direction of the cushioning product through the system. A semi-endless cushioning product may have a width and a total length, wherein the total length may be one, two or more orders of magnitude larger than the width.

The term web layer may be used interchangeably with web substrate and web ribbon. The web layer may include fiberboard, chipboard, corrugated board, corrugated medium, solid bleached board (SBB), solid bleached sulfite board (SBS), solid unbleached board (SUB), white lined chipboard (WLC), craft paper, craft board, coated paper, cardboard, metallic paper, metallic paperboard, paper, paperboard, wood, or foil; recycled or recyclable paper, recycled or recycled plastic or plastic film. While paper is shown as a preferred material, it may be appreciated that other materials may be used to form the web-layer. Alternatively, wax-coated paper; paper with plastic, or water-resistant or stain-resistant coatings may be employed. Pre-printed rolls of paper or other material may be used to provide advertising or other information on the final product. Preferably, the web-layer may be made of a cellulosic material such as paper. The grammage of paper, cardboard or another material may be in the range from at least 10 g/m² to at most 400 g/m². In particular, the grammage may be at least 50g/m² and/or at most 200 g/m². A web layer may in particular include a light-weight paper of 50 g/m². Alternatively, a web layer may in particular include a heavy paper product of 200 g/m².

An expandable layer may preferably include a water-based heat-expandable adhesive (WBHEA) as described for example in WO 2019/040624 A1, US 9,480,629, US 8,747,603, US 9,273,230, US 9,657,200, US 20140087109, US 210170130399, US 2017 013-0058, or US 2016 026-3876. The WBHEA may comprise an emulsion-based polymer selected from a group consisting of starch-vinyl acetate ethylene dispersion, polyvinyl acetate, polyvinyl alcohols, polyvinyl acetate / polyvinyl alcohol copolymers, dextran stabilized polyvinyl acetate, polyvinyl acetate copolymers, vinyl acetate/ethylene copolymers, vinyl acrylic, styrene acrylic, acrylic, styrene butyl rubber, polyurethane and mixtures thereof. The WBHEA may include a plurality of heat-expandable microspheres. The WBHEA may include one or more additives selected from a group consisting of plasticizers, accelerants, tackifiers, humectants, preservatives, antioxidants, biocides, further pigments, dyes, stabilizers, rheology modifiers, polyvinyl alcohol and combinations thereof. The WBHEA EA pack may be positioned on the web layer in one or more patterns formed by a continuous or discontinuous application of WBHEA; particularly allowing space for expansion. A pattern may include discrete areas of WBHEA including one or more connections by bridges of WBHEA between two or more discrete areas. A pattern of the WBHEA may comprise an array of discrete elements (beads). Beads may have a length and a width, the shortest of those dimensions being in the range of about 0.05 inches to about 2.0 inches and the longest of those dimensions being in the range of about 0.2 to about 2.5 inches.

An expandable layer may have an initial compact or unexpanded state and a an expanded state. Upon changing from the compact state to the expanded state, the volume of the expandable layer may increase. In particular, the volume of the expandable layer may expand by a factor of at least 2, at least 5, at least 10, at least 15 or at least 20 in relation to the layer's volume in the compact state. By exposing the cushioning product to infrared radiation, the expandable layer may be caused to change from its compact state to its expanded state. It may be preferred that the thickness of the one or more web layers is smaller than the thickness of the expandable layer in its expanded state. By changing the state of the expandable layer, the volume of the entire cushioning product may be increased from an initial compact state of the cushioning product to an expanded state of the cushioning product.

In one particular preferred embodiment, the multi-layered cushioning product comprises two web layers surrounding one expandable layer. In particular, the cushioning product consists of two web layers surrounding the expandable layer. In an alternative preferred embodiment, the cushioning product comprises two pairs of two web layers surrounding one respective expandable layer each. One preferred embodiment, the cushioning product may consist of two pairs of web layers, each pair surrounding a respective expandable layer. In one preferred embodiment, cushioning product may have a hose-like cross-section (or: O-like cross-section) having an inner web layer defining the cushioning product's interior surface, an outer web layer defining the cushioning product's outside surface, wherein the expandable layer is arranged and intermediately between the inner and outer web layer.

The system according to the invention is as defined in claim 1. It comprises at least one radiator module for irradiating the multi-layered cushioning product, including at least one emitter, such as a filament, panel or the like, for emitting infrared radiation at an operative temperature of at least 600°C and at most 3000°C. An emitter may consist of or comprise one or more electric resistors for transforming electric energy into thermal energy and infrared radiation.

The system has at least one radiator module. The at least one radiator module comprises two radiator modules. In particular, the system may comprise two or more radiator modules. A preferred embodiment of the treatment system comprises exactly two radiator modules. The system comprising two or more radiator modules is configured such that one or more first radiator modules and one or more second radiator module are arranged for emission of infrared radiation at opposite sides of the multi-layered cushioning product. The term radiator module as used in the present application may be referred to as "radiator field" or "heating field".

The radiator module has at least one emitter. An emitter may be called "heating element".

Preferably, a radiator module comprises two or more emitters. A preferred embodiment of a radiator module may comprise exactly two emitters, exactly three emitters, exactly four emitters, or exactly five emitters. A preferred embodiment of the radiator module comprises exactly six emitters. In particular, the radiator module comprises at least two, at least three or at least four emitters. A radiator module preferably comprises at most 20 emitters, at most ten emitters, at most eight emitters or at most six emitters.

A radiator module may be realized as a set of emitters housed within a common modular casing. The radiator module may refer to a set of emitters sharing a singular common plug and/or sub for power supply of the entire radiator module. A radiator module preferably refers to a set of two or more emitters housed within one common casing provided with a common supply plug and/or supply socket for power supply to the emitters from a power source of the system.

A radiator module casing may be provided with one or more reflective surfaces, such as a mirror, an opaque glass, and aluminum reflector, a gold reflector or the like. A radiator module may comprise a protective barrier such as a protective mesh and/or window, for shielding the one or more emitters from the radiator module's surroundings and/or vice versa, for example for preventing direct contact of the operator or cushioning product from my coming into contact with one or more emitters. The radiator module may comprise a casing with one or more conduits for cooling liquid. Cooling liquid may refer to a fluid or gas, in particular ambient air. The casing of the radiator module may comprise one or more exhaust ducts for removal of exhaust gas, steam and/or particles from treated cushioning products and/or out of the infrared radiated area or treatment zone. The radiator module having a casing and/or power supply socket and/or plug may facilitate handling, maintenance, assembly and disassembly of the system.

In the at least one radiator module of the system, each individual emitter of the radiator module may provide a power output of at least 1 kW/m, preferably at least 2kW/m, particularly at least 3 W/m. The at least one radiator module of the system, each individual emitter may have a power output of no more than 20 kW/m, preferably no more than 10 kW/m, in particular no more than 7 kW/m. The power output may be defined as the electrical input energy divided by the longitudinal extension of the emitter. The longitudinal extension of the emitter may be referred to as the effective length of the emitter or radiator module, or as infrared emitting length of the radiator module, particularly of the emitter, such as the length of the filament, length of panel or the like, which emits infrared radiation. The longitudinal extension of an emitter may extend in a widthwise direction and/or across in relation to a conveying direction.

In one preferred embodiment, at least one emitter may be realized as a panel, like an infrared panel, such as ceramic panel or a panel made of an opaque glass matrix surrounding with a semiconductor material or the like. In one preferred embodiment, at least one emitter may be realized as a filament, for example a filament made of carbon, a precious metal, a refractory metal or a combination thereof. Precious metals include Ru, Rh, Pd, Os, Ir, Pt, Cu, Ag, and Au. Refractory metals
include Ni, Mo, Ta, W and Re. The emitter may be a halogen and/or NIR (near infrared) emitter, as shortwave infrared emitter, a fast response medium wave infrared emitter, a carbon infrared emitter, or a medium wave infrared emitter or a longwave infrared emitter.

In one preferred embodiment, the infrared emitter is a halogen / NIR emitter including a filament made of a refractory metal, in particular tungsten, which is configured to be operated between 2300 °C and 3000 °C inside of a halogen gas atmosphere, in particular so as to emit the majority of the emitter's energy at a wavelength spectrum between 0.7 and 2.0 µm.

In one preferred embodiment, the infrared emitter is a shortwave emitter including a filament made of a refractory metal, in particular tungsten, which is configured to be operated between 1800 °C and 2200 °C inside a noble gas atmosphere, in particular so as to emit the majority of the emitter's energy at wavelength spectrum between 0.7 and 2.0 µm.

In one preferred embodiment, the infrared emitter is a fast response medium wave emitter including a filament made of a refractory metal, in particular tungsten, which is configured to be operated between 1400 °C and 1800 °C inside a noble gas atmosphere, in particular including Argon, in particular so as to emit the majority of the emitter's energy at a wavelength spectrum between 1.5 and 3.0 µm.

In one preferred embodiment, the infrared emitter is a CIR (Carbon infrared) emitter including a filament made of carbon, which is configured to be operated between 900 °C and 1500 °C inside a noble gas atmosphere, in particular including Argon, in particular so as to emit the majority of the emitter's energy at a wavelength spectrum between 2.0 and 4.0 µm.

In one preferred embodiment, the infrared emitter is a medium wave infrared emitter including a filament made of a metal alloy such as Nichrome, in particular comprising at least one of Nickel, Chromium, Iron and possibly other element, which is configured to be operated between 800 °C and 1000 °C inside a noble gas atmosphere or without a protective gas atmosphere, in particular so as to emit the majority of the emitter's energy at wavelength spectrum between 2.0 and 4.0 µm.

In one preferred embodiment, the infrared emitter is a longwave infrared emitter including a ceramic panel attached to filament made of a metal alloy such as Nichrome, in particular comprising at least one of Nickel, Chromium, Iron and possibly other element, which is configured to be operated
with a filament temperature of at most 900 °C and a panel surface temperature between 300 °C and 800 °C, in particular so as to emit the majority of the emitter's energy at wavelength spectrum above 4.0 µm.

In one preferred embodiment, the infrared emitter is a black.infrared^{™} emitter including an opaque panel comprising an amorphous anorganic, particularly quartz glas, matrix material and at least one semiconductor material dispersed within the matrix material, attached to filament made of a metal alloy such as a noble metal, in particular Platinum, or such as Nichrome, in particular comprising at least one of Nickel, Chromium, Iron and possibly other element, which is configured to be operated with a panel surface temperature between 800 °C and 1200 °C, in particular so as to emit the majority of the emitter's energy at wavelength spectrum between 2.0 and 4.0 µm.

In one preferred embodiment, the infrared emitter is a metal sheet emitter including a metallic panel in which an insulating powder and a filament made of a metal, such as Nichrome, in particular comprising at least one of Nickel, Chromium, Iron and possibly other element, which is configured to be operated with a sheet emitter surface temperature between 500 °C and 800 °C, in particular so as to emit the majority of the emitter's energy at wavelength spectrum above 4.0 µm.

According to one embodiment, the at least one emitter has a peak wavelength between 0.8 µm and 4.0 µm. In particular, the emitter has a peak wavelength of at least 2.0 µm or at least 2.5 µm. Alternatively or additionally, the emitter may have a peak wavelength of at most 2.5 µm or at most 3.0 µm or up to 3.5 µm. It has been shown that providing an irradiating with emitters having a peak wavelength around 2.5 µm to 3.0 µm allow for the most efficient expansion treatment of multi-layer cushioning product.

The at least one radiator module has a power output density of at least 10 kW/m², at least 50 kW/m², in particular at least 60 kW/m². Additionally, the at least one radiator module has a power output density of at most 300 kW/m², in particular at most 150 kW/m², more particularly at most 100 kW/m². In a preferred embodiment, the power output density of the at least one radiator module is at least 50, preferably at least 60 kW/m² and/or at most 85 kW/m², preferably at most 75 kW/m².

The power output density may be defined as the electric supply to the radiator module divided by the infrared emitting area (emission window) of the radiator module. The infrared emitting area of the radiator module may be defined as the cumulative area of the radiator module casing comprising a window to be directed towards the treatment zone or cushioning product. The infrared emitting area may be defined as the cumulative area of the infrared emitters of the radiator module. In particular, the power output density may be calculated based upon the actual power output during operation. For example, a radiator module having an emission window of 1 m X 1 m, operated at a power load of 50 kW would have the power output density of 50 kW/m²; whereas a radiator module having an emission window of 1 m × 0.5 m, operated with a power load of 50 kW would have a power density of 100 kW/m². An infrared radiator module having a nominal maximum installed power output density of 100 kW/m² but operated at 65% of the nominal maximum installed power output density, the power output density would be 65 kW/m².

In a preferred further development of the embodiment, during continuous operation the system may be configured such that the radiator module is operated at at least 40%, particularly at least 50%, and/or at most 80%, particularly at most 75%, more particularly at most 60% nominal maximum operating output power density. A system comprising two or more radiator modules may be configured such that the first radiator module and a second radiator module are operated at different operating output power densities during continuous operation. For example, a first radiator module may be configured to be operated at a lower operative power output density than a second radiator module. Preferably, the two or more radiator modules of the system are built to the same specifications. For example, the first radiator module (top emitter) may be run at between 45% and 65%, particularly between 50% and 60% nominal maximum power output density. In particular, a second (lower) radiator module may be run at a higher operative power output density than a first (upper) radiator module. In one embodiment, the second radiator module may be run at an operative power output density of at least 65% and at most 85%, preferably 75%, nominal maximum output power density.

The at least one radiator module is arranged at a distance of 50 mm to 500 mm, in particular of 100 mm to 200 mm, more particularly 150 mm, relative to the cushioning product. The at least one (first) radiator module is arranged above the cushioning product, and at least one (second) radiator module is arranged below the cushioning product. The system comprises two or more radiator modules, a first radiator module is arranged above the cushioning product and the second radiator module is
arranged below the cushioning product. In a system comprising two or more radiator modules, the radiator modules are arranged on opposite sides above and below cushioning product. It shall be clear that the terms "above" and "below" designate mutually opposite sides of the system in relation into the treatment zone or multi-layered cushioning product to be treated. For example, in a system in which multi-layer cushioning product may be arranged and/or conveyed in a horizontal plane (extending in the X- and Y-direction), the terms "above" and "below" as used herein may refer to the arrangement of the radiator modules vertically above and vertically below the cushioning product, respectively. In an alternative system, in which multi-layer cushioning product may be conveyed and/or arranged in a vertical plane (extending in the Z-direction and in the X- or Y-direction), the radiator module might be arranged vertically in the same height above the ground, wherein the first radiator module could be arranged to the left of the cushioning product at the second radiator module could be arranged to the right of the cushioning product. In other words, the terms "above" or "to the left" generally shall be understood to refer to a first direction. The terms "below" or "to the right" as used herein shall generally be understood to relate to a second direction, the second direction being a different, in particular opposite relative to the first direction.

The distance between the cushioning product and at the infrared radiator module may be defined by distance between the approximately planar or two-dimensional (upper or lower) outer surface of the cushioning product to the front side of the radiator module, particularly the radiator module casing or emission window thereof facing the cushioning product. In a system comprising two or more radiator modules arranged at opposite sides of the cushioning product, it may be preferred that the first radiator module and the second radiator module are arranged in the same or approximately the same distance from the cushioning product, in particular at 80 - 220 mm, preferably 150 mm ±15 mm.

The system comprises a conveyor, in particular a belt conveyor, more particularly an open-meshed belt conveyor, for moving the cushioning product relative to the at least one radiator module. The conveyor may include one or more conveyor elements. In particularly, the system is configured for conveying the cushioning product the of the conveyor during treatment, that is during operation of the system.

In one particular preferred embodiment, the conveyor has a treatment section in which the conveyor belt moves along a horizontal or essentially horizontal plane. An essentially horizontal plane may be slightly tilted, in particular by no more than 5% and/or no more than 2%. In particular, the at least one radiator module of the system faces the treatment section of the conveyor within a treatment zone of the system. The treatment zone of the conveyor may be defined by an emission window of the radiator module facing towards the cushioning product. A first radiator module may be arranged vertically above the conveyor belt, thereby limiting the treatment section in the vertical upward (Z-) direction. A second radiator module may be arranged vertically below the conveyor belt, thereby limiting the treatment section in the vertical downward direction. A second radiator module may be arranged vertically below the conveyor belt and below the conveying section of the conveyor. It may be preferred to operate the second radiator module below the conveyor element at a higher operative power output density than a first radiator module above the cushioning product, to allow for the additional heat capacity of the conveyor element. The conveyor may comprise one belt for conveying the cushioning product both within the treatment zone and into the treatment zone and/or out of the treatment zone. In an alternative preferred embodiment, the conveyor may have several conveying elements, for example one conveying element such as a conveyor belt designated for moving the cushioning product exclusively within the treatment zone, and one or more conveying elements for moving the cushioning product outside of the treatment zone.

In one embodiment, the system comprises a controller for controlling the dose of radiation caused to the cushioning product by the at least one radiator module. A controller may comprise several individually operable controlling elements, such as manual controls. The controller may comprise, for example one thyristor for power control of the radiator module. The controller may alternatively or additionally comprise another controlling element for velocity control of the conveyor. In a further embodiment, the controller is configured for setting a movement speed of the cushioning product relative to the at least one radiator module. Alternatively or additionally, in one further development of the system, the controller is configured for setting a radiation output of the at least one radiator module.

In a further development, the system comprises at least one temperature sensor, wherein the controller is operatively coupled to the temperature sensor for controlling the dose of radiation caused to the cushioning product by the at least one radiator module based on the temperature sensed by the temperature sensor. In particular, the temperature sensor may be a surface temperature sensor, such as a pyrometer, for sensing the temperature on the surface of the cushioning product. Alternatively or additionally, a temperature sensor may be an air temperature sensor, in particular for measuring the air temperature of the irradiation treatment system. An air temperature sensor may be arranged to sense the air temperature at an outlet duct of the system, such as an exhaust duct for exhaust particles, steam and/or gas from the cushioning product.

In one embodiment, a shut-off trigger causes the at least one radiator module, in particular all radiator modules, to cease irradiating the cushioning product within 10 seconds or less, in particular within 5 seconds or less, more particularly within 2 seconds or less. It shall be clear that "ceasing irradiation" shall be understood in that the radiation provided from the radiator module(s) to the cushioning product is reduced from the operative power output density to below 15% of the nominal maximal operative power output density, particularly below 10%; in particular below 5%, more particularly below 2%. The system may cause the one or more radiator module to cease irradiating the cushioning product by shielding the cushioning product from the at least one radiator module. Alternatively or additionally, the radiator module may be caused to cease irradiating the cushioning product by turning the radiator module off, in particular by interrupting the supply of electrical power to the radiator module(s).

The invention further relates to an arrangement comprising a multi-layered cushioning product or multiple multi-a or cushioning products, the multi-layered cushioning product including at least one web layer and at least one layer comprising a water-based heat-expandable adhesive (WBHEA) and a system as detailed above.

The invention further relates to an operating method, as in claim 10, for a system, particularly for system as detailed above and/or an arrangement as detailed above, for expanding multi-layered cushioning products including at least one web layer and at least one expandable layer including a water-based heat-expandable adhesive. In the operating method according to the invention, the cushioning product is irradiated by an infrared radiator module including at least one emitter, such as a filament, panel or the like, the emitter emitting infrared radiation at an operative temperature of at least 600°C and at most 3000°C, wherein the cushioning product is provided with no less than 10 mJ/cm² and no more than 50 mJ/cm² for causing expansion of the WBHEA in the expandable layer. In a particular preferred embodiment of the operating method, the cushioning product is provided with no less than 17 mJ/cm² and/or no more than 25 mJ/cm². In one particular
embodiment of an operating method, the cushioning product is provided with 21 mJ/cm² ±2 mJ/cm². The provision of energy to the cushioning product shall be understood to relate to the surface area of the cushioning product and to the energy provided thereto by the at least one radiator module in the system. For example, the energy may relate to the energy provided to the surface area of the cushioning product during the conveyance of an item cushioning product or a section of a web of cushioning product through a treatment zone.

In one embodiment and operating method is provided, wherein radiation is provided to the cushioning product at a wavelength of at least 0.7 µm and at most 5.0 µm, in particular with a peak wavelength between 2.0 and 4.0 µm, particularly with a peak wavelength of 2.5 µm to 3.5 µm most particularly with a peak wavelength of 3.0 µm ±0.25 µm.

According to one embodiment, an operating method is provided, wherein the at least one radiator module is operated with a power output density of at least 10 kW/m², in particular at least 15 kW/m², more particularly at least 20 kW/m². Alternatively or additionally, an operating method is provided wherein the at least one radiator module is operated with a power output density of at most 150 kW/m², in particular at most 100 kW/m², more particularly at most 60 kW/m². It may be preferred that the system is operated, in particular during the continuous operating mode, with 2 kW/m² to 40 kW/m² or with 30 kW/m² to 50 kW/m².

In a further development of an operating method, the at least one radiator module may be run at a first conveying power output level during a startup mode and at a second conveying power output level during a continuous mode, wherein the second conveying power output level is lower than the first conveying power output level. The first conveying power output level may be between 50 kW/m² and 100 kW/m², preferably between 60 kW/m² and 80 kW/m², more particularly at about 65 kW/m². A second conveying power output level may be between 10 kW/m² and 50 kW/m², in particular between 20 kW/m² and 40 kW/m².

In one embodiment of the operating method, the cushioning product is heated to a peak temperature of at least 80°C, in particular at least 90°C, and/or a peak temperature of at most 160°C, in particular at most 140°C. The peak temperature of the cushioning product is defined as the maximum temperature reached by of the cushioning product, particularly in the system, more particularly in the treatment zone of the system. The peak temperature of the cushioning product is the highest temperature which the cushioning product reaches during normal operation. A peak temperature may for example be measured indirectly with a pyrometer directed onto the outer surface of the cushioning product. For instance, the peak temperature may be determined by measuring a surface temperature with the Infrared Cameras Inc. ICI-7320 USB camera and accompanying IR 15 Flash Software (version 2.12.12.7). Alternatively, a peak temperature may be determined using a thermocouple arranged on the surface, in particular in immediate contact with the outer surface, of the cushioning product. The thermocouple may be a Type K Thermocouple for measuring Temperature between - 270 °C and 1260 °C, in particular with a tolerance of no more than ± 2.2 °C or ±0.75 °C. Alternatively, the thermocouple may be a Type J Thermocouple for measuring Temperature between -210 °C and 760 °C, in particular with a tolerance of no more than ± 2.2 °C or ±0.75 °C. The thermocouple may be attached to a surface, in particular the upper or lower outside surface. Alternatively, for measuring internal temperature, the thermocouple may be attached to an internal pouch surface. The thermocouple may be attached to a surface using a metallic or metallized tape, such as aluminum foil, silver foil, or aluminum foil framed in kapton tape.

According to the operating method, the cushioning product is irradiated for 1 to 10 seconds, preferably for 4 to 8 seconds, more particularly for 5 to 6 seconds. The duration of the irradiation to the cushioning product may be defined by duration it takes to convey the cushioning product through the system, particularly its treatment zone (dwell time). The duration of the exposure may be determined as the duration during for which the cushioning product is exposed to infrared radiation from at least one radiator module. The dwell time may be defined for example by turning the radiator module on for the desired duration, and then off, and/or by controlling a heat shield between the radiator module and the cushioning product to expose the cushioning product to the radiator module's irradiation for the desired duration.

According to the operating method, the cushioning product is conveyed relative, in particular parallel, to the radiator module through the treatment zone irradiated by the at least one radiator module for a dwell time of 1 to 10 seconds, in particular 4 to 8 seconds, more particularly 5 to 6 seconds.

Additionally or alternatively, operating method comprises that the conveying product is conveyed at a continuous conveying speed of at least 5 mm/s, in particular at least 8 mm/s, more particularly at least 10 mm/s, and/or at most 20 mm/s, in particular at most 15 mm/s, more particularly at most 12 mm/s.

The dwell time may be defined by setting a desired conveying speed dependent on the lengthwise size of the radiator module (the length being determined in the Y-direction defined in parallel to the conveying direction C of the conveyor) of the heating field and the desired dwell time of the cushioning product within the treatment zone. Alternatively, the dwell time may be defined or set dependent upon the radiator power output, the lengthwise extensions of the treatment zone, the conveying velocity of the cushioning product and/or the size of the cushioning product to be treated such that the cushioning product is provided with no less than 10 mJ/cm², in particular no less than 17 mJ/cm² and/or provided with no more than 50 mJ/cm², in particular no more than 25 mJ/cm². In a further development of the operating method, a conveyor for transporting the product relative to the radiator module is run at a first conveying speed during a startup mode and at a second conveying speed during a continuous mode, wherein the second conveying speed is faster than the first conveying speed. If the conveyor moves in an intermittent manner, the first or second conveying speed may be defined as an average conveying speed calculated over the duration of one minute of operation. By setting the power output density to a higher level during a startup more and/or by setting the conveying speed to a slower velocity during start-up mode in relation to the conveying speed setting and/or power output density setting during normal operating mode, it is possible to quick-start the system and providing completely processed cushioning products even during start-up mode, during which the treatment zone has not yet reached operating conditions.

In the operating method, the cushioning product is held at a distance of 50 mm to 500 mm, in particular at a distance of 100 mm to 200 mm, more particularly at a distance of 150 mm, relative, preferably in parallel, relative to the at least one radiator module.

In one embodiment of an operating method, the at least one radiator module, in particular all radiator modules, is caused to cease irradiating the cushioning product within ten seconds or less, in particular within five seconds or less, more particularly within two seconds or less. In this embodiment, the operating method is provided with a shut-off mode to safely remove the cushioning product from infrared radiation, for example in case of malfunction which might otherwise pose a fire hazard.

Unless otherwise stated, it may be assumed that tests were conducted at an ambient temperature of 23°C, and ambient air pressure of 100 kPa (0.986 atm) and a relative humidity of 50%.

### BRIEF DESCRIPTION OF THE DRAWINGS

The following schematic drawings show aspects of the invention for improving the understanding of the invention in connection with some exemplary illustrations, wherein
- Figure 1: shows a schematic of a system for expanding a multi-layer cushioning product;
- Figure 2: shows a cross-sectional view of the system of figure 1 along the section line II; and
- Figure 3: shows a schematic view of a radiation module for a system for expanding a multi-layer cushioning product.

### DETAILED DESCRIPTION

A system for treatment of a multi-and layered cushioning product for expansion of thereof in accordance with the invention is generally designated with the reference numeral 1. The system 1 comprises as its main constituent at least one radiator module 5, 6 for irradiating the multi-and layered cushioning product 3a, 3b, 3c, the radiator module 5, 6 including at least one emitter 7, such as a filament, panel or the like. The emitter 7 is configured to emit infrared radiation 9 during operation, and an operative temperature of the emitter of at least 600°C and at most 3000°C.

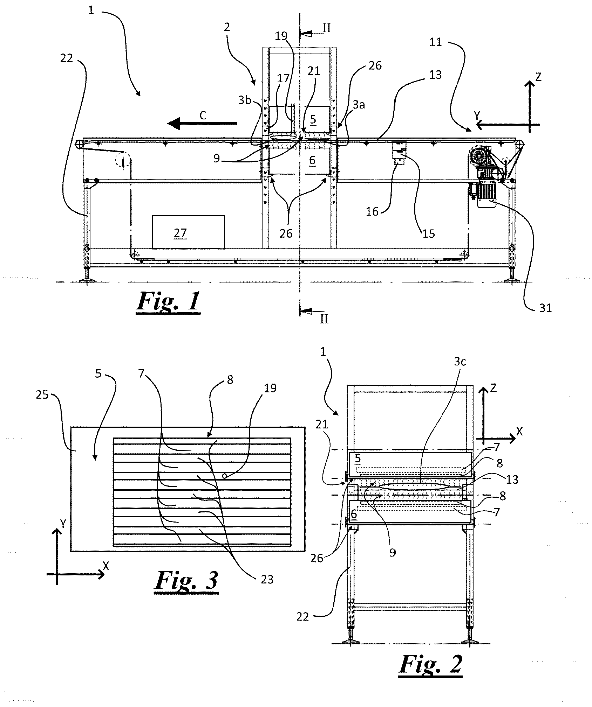

Although the schematic illustrations according to Fig. 1 and 2 depict the same system 1, the illustrations differ in that Fig. 1 shows the individual items of multi-layered cushioning products 3a, 3b whereas Fig. 2 illustrates an arrangement 2 comprising a system 1 processing a continuous, web-like cushioning product 3c.

In the illustrations, the direction designated with an X designates the direction in which the "width" of the components of the system or arrangement are may be defined. The direction designated with Y generally relates to the length by direction that may be arranged horizontally and/or correspondingly, particularly in parallel, relative to the conveying direction C. The Z direction is the vertical direction in relation to gravity. The vertical direction Z may generally correspond to a normal relative to a plane defined by the floor on which the system 1 rests. The terms "above" and "below" may relate to a relative arrangement of two or more components relative to one another in regard to the vertical direction Z.

A radiation module 5 is shown in detail in Fig. 3. The radiation module 5 comprises six infrared emitters 7. The infrared emitters 7 of the radiation module 5 may particularly be realized as infrared emitters comprising a heating element made of a carbon filament.

In a preferred embodiment of the infrared radiation treatment system 1 according to the invention, the emitter 7 is a carbon infrared emitter, for example a Heraeus Noblelight CIR emitter 3750W/230V with a total power output capability of 22.5 kW and a power density of the radiator module of 72 kW/m². A radiator module 5, 6 casing 25 may have a width of 500 mm to 1000 mm, preferably 600 mm to 900 mm, for example 865 mm. The length of the radiator module may be between 200 mm and 800 mm, in particular between 400 mm and 700 mm, for example 550 mm. The heated width or emission window 8 of the radiator module 5, 6 may be approximately 625 mm wide and approximately 500 mm long. The meshed wire belt conveyor 13 may have a length of 3000 mm width of 950 mm. The belt height may be 900 mm from the ground.

The emitters 7 may be arranged in a casing 25 of the radiator module 5 behind an emission window 8. The emission window 8 may be provided with a glass window, preferably a quartz glass window and/or a protective mesh. The radiator module 5 may be equipped with one or more reflectors such as mirrors behind the at least one emitter 7 in relation to the emission window 8 for reflecting radiation 9 from the emitter 7 towards the emission window 8. The radiator module 5 may be provided with an exhaust duct 19 such that exhaust particles, steam and/or gas can easily be removed from the treatment zone 21.

The emission window 8 defines a heated width in the X-direction and a heated length in the Y-direction of the radiator module 5. For some emitters 7, in particular for carbon infrared (CIR) emitters, the heated width of the radiator module 5 may be between two thirds and 5/6; particularly approximately % of the total width of the casing 25 of the infrared radiation module 5. The heated length of the radiator module 5 may be between three quarters and 95% of the total length of the radiator module 5 in the Y-direction. For some emitters 7, in particular for halogen and/or NIR emitters, the heated width of the radiator module 5 may be between three quarters and 95% of the total width of the radiator module 5 in the X-direction.

The system 1 may comprise only one radiator unit 5 or 6 arranged above or below a treatment zone 21 for a multi-layered cushioning product including at least one heat-expandable layer. As shown in figures 1 and 2, the system 1 may comprise several radiator modules, in particular two radiator modules 5 and 6. One first radiator module 5 may be arranged vertically above the treatment zone 21 and another, second radiator module 6 may be arranged vertically below the treatment zone 21. The cushioning product is irradiated in the treatment zone 21 using infrared radiation 9.

The length and width of the treatment zone 21 corresponds to the area irradiated by the radiation modules 5 and 6, in particular to the size of their respective emission windows panes 8. The radiator modules 5 and 6 may be of the same design. The first and second radiator 5, 6 may have the same number of infrared emitters 7. Several, in particular all, emitters of the first radiator module 5 and/or second radiator module 6 may be equal to one another.

The controller 15 may comprise a first thermal control unit (not shown in further detail detail) to control the operative power level of the first radiator module 5 supplied from the power supply 27. The controller 15 may include a second thermal control unit for control of the operative power supplied from the power supply 27 to the second radiator module 6. The controller may comprise a velocity control unit for controlling the velocity of the conveyor 11. The velocity control unit may be realized as an open loop control which a constant velocity setting is provided to the electric motor 31 dependent upon a velocity control input. Alternatively, the velocity control may include a velocity sensor for a closed loop control of the conveyor belt 13 velocity.

The control 15 may be configured to run the system 1 at a continuous operating mode different from a start-up mode. In the start-up mode, the controller 15 may control the electric motor 31 to drive the conveyor belt 13 with a start-up velocity lower than the conveyor belt 13 velocity during normal operation. Furthermore, the controller 15 may be configured to control the one or more radiator modules 5, 6 to operate at or near maximum nominal power output during a start-up mode in order to quickly heat up the treatment zone 21 of the system 1.

The temperature sensor 17 may be provided and operatively coupled to the controller 15. The temperature sensor 17 may sense the air temperature of the treatment zone 21. Alternatively or additionally, temperature sensor 17 may be arranged to detect the surface temperature of the outside of an irradiation treated cushioning product 3a, 3b, or 3c. The temperature sensor 17 may be operatively coupled with a controller 15 such that the controller 15 can control the at least one radiator module 5, 6 and/or the drive 31 of the conveyor belt 13 based on the readings of the temperature sensor 17.

The nominal maximum power output density of the first radiator module 5 and of the second radiator module 6 may be equal to one another. During a continuous normal operation, the control 15 may set the lower or second radiator module 6 to an operative power output density of between 60% and 80% of the nominal maximum output power density. The controller 15 may set the upper or first radiator module 5 during operative mode to a relatively lower power output density of 40% to 60% of the nominal maximum power output density of the radiator module 5.

During start-up mode, the controller 15 may drive at the first radiator module 5 and the second radiator module 6 to the maximum power output density, or at least 90% thereof. During operative mode, the power output density of the lower, second radiator module 6 may be set to a power density higher than that of the upper, first radiator module 5 to allow for the additional heating of the mesh conveyor belt 13 between the lower radiator module 6 and the cushioning product 3a, 3b, 3c.

It may be preferred that the controller 15 sets the velocity of the conveyor belt 13 and the power output densities at least one radiator module 5, 6 dependent upon the lengthwise extensions of the treatment zone 21 and/or the size of the cushioning product to be treated such that the cushioning product is provided with no less than 10 mJ/cm², in particular no less than 17 mJ/cm² and/or provided with no more than 50 mJ/cm², in particular no more than 25 mJ/cm².

During operative mode, the infrared emitters 7 of the at least one radiator module 5, 6 are run at an operative temperature of at least 600°C and at most 3000°C. During operative mode, the emitters 7 may be operated with a peak wavelength between 0.8 µm and 4.0 µm, particularly between 2.5 µm and 3.5 µm. The peak wavelength of an emitter shall be understood to relate to the wavelength at which the infrared emitter 7 provides is maximum radiation power. Generally, infrared emitters 7 emit radiation spread over a relatively large spectral distribution, which may range from the visible spectrum through the shortwave spectrum, into the medium wave spectrum and possibly into long wave spectrum. The short wave spectrum shall be defined as radiation having a wavelength between 0.7 µm and 2.0 µm. The medium wave spectrum shall be defined as a spectrum ranging from 2.0 µm to 4.0 µm. The longwave spectrum shall be defined as radiation having a wavelength greater than 4.0 µm. Depending on its temperature, and infrared emitter may deliver distinctly different radiation at various wavelengths. The peak wavelength as used herein refers to the peak wavelength of the emitter at its nominal operative temperature.

It shall be clear that the controller 15 may control the power output density of the at least one radiator module 5, 6 indirectly. For example, the controller 15 may control the electric power supplied to the radiator module 5, 6. The power output density of the radiator module 5, 6 may be determined by dividing the cumulative electric power supply (power load) provided to the one or more emitters 7 of the radiator module 5, 6 by the size of the emission window 8 thereof.

The radiator modules 5 and 6 are supplied with electrical power from a power supply 27 of the treatment system 1. The conveyor 11 may also be supplied with electrical power from the power supply 27. The conveyor 11 may comprise an electric drive, such as an electric motor 31 the trigger 16 may be configured to interrupt the supply of electrical energy from the power supply 27 to the radiator modules 5, 6. The trigger 16 may be configured to cause the electric motor 31 to halt the conveyor belt 13 upon activation. Alternatively, the trigger 16 may be configured to accelerate the velocity of the conveyor belt 13 upon activation.

The treatment system 1 may comprise a frame 22 to which the radiator modules 5, 6, the conveyor 11, including its belt 13 and drive 31 are mounted. Further components of the system may also be attached to its frame 22. The controller 15, the trigger 16 and the power supply 27 may be attached to the frame 22 of the treatment system 1. Alternatively, the power supply 27 the controller 15 and/or the trigger 16 may be part of a separate structure, such as a control panel (not shown in further detail). The trigger 16 may be a sensor testing if the conveyor 11 is running which would send a stop signal to the controller 15 and/or radiator module(s) 5, 6 to cease irradiation.

The frame 22 of the IR radiation treatment system 1 may comprise support racks 26 for receiving the radiator modules 5, 6. A support rack 26 may comprise rails onto which are radiator module 5, 6 may be put. The rails of the support rack 26 can be used to slide the radiator module 5 or 6 into the treatment system 1. The support rack 26 may be shaped complementarily in relation to the casing 25 of the radiation module 5, 6. The support racks 26 may be provided with fixing means and/or safety means for holding the radiator module 5, 6 in position relative to the treatment zone 21, conveyor 11 and/or cushioning products 3a, 3b, 3c. The radiator modules 5, 6 may be arranged 300 mm apart. Each radiator module 5, 6 may be arranged at a distance of 150 mm from the cushioning product to be treated.

Figure 1 schematically illustrates the treatment of multi-layered cushioning product 3a, 3b using infrared radiation to expand and heat-expandable layer of the multi-layered cushioning product 3a, 3b which includes the water-based heat-expandable adhesive (WBHEA). While the cushioning products 3a, 3b travel through the treatment zone 21 of the treatment system 1 in the conveying direction C, the cushioning product 3a, 3b are exposed to infrared radiation 9 from the emitters 7 of the radiator modules 5, 6. The infrared radiation 9 heats the surface of the cushioning product 3a, 3b, thereby heating the additional one or more layers of the cushioning product 3a, 3b including the heat-expandable layer.

For example, the treatment system 1 may be run via the controller 15 such that the cushioning product is fed through the treatment zone 21 with a dwell time of 5 to 6 seconds during which the radiator modules 5, 6 provided between 50 and 80 kW/m². Between 20 and 40 kW/m². It has surprisingly been shown that the short-term supply of sufficient infrared radiation suffices to cause the expandable layer which includes water-based heat-expandable adhesive to expand. In particular, the volume of the expandable layer may be increased by a factor of at least 2, at least 5, at least 10, at least 15 or at least 20 during treatment. When the cushioning product 3a, 3b is inside the treatment zone 21 and exposed to infrared radiation 9, the volume of the entire cushioning product is thereby increased from an initial compact state of the cushioning product 3a to an expanded state of the cushioning product 3b.

In comparison, Fig. 2 illustrates a continuous cushioning product 3c which is fed through the treatment zone 21 of the treatment system 1 in the conveying direction C such that different longitudinal sections in the lengthwise Y-direction of the cushioning product 3c undergo the treatment process and thereby expand from a compact state at the entry of the treatment zone 21, reaching an expanded state upon exit from the treatment zone 21.

The emission of infrared radiation 9 from the emitters 7 to the cushioning product 3a, 3b, 3c is a controlled by the controller 15 in conjunction with the velocity of the conveyor 11 such that the desired peak temperature is reached. It may be preferred that the radiator modules 5, 6 provide infrared radiation to the cushioning product 3a, 3b and to provide the cushioning product with a peak temperature of at least 80°C, in particular at least 90°C. It may be preferred that the treatment system is operated such that the peak temperature of the cushioning product does not exceed 160°C, particularly such that it does not exceed 140°C. Overheating of the cushioning product detrimentally affects the volume of the expansion layer and may even cause thermal damage to or ignite the cushioning product.

## Claims

1. System (1) for treatment of a multi-layered cushioning product (3a, 3b, 3c) including at least one web layer and at least one expandable layer including a water-based heat-expandable adhesive (WBHEA), **characterized in that** it comprises
(a) at least one radiator module (5, 6) for irradiating the multi-layered cushioning product (3a, 3b, 3c) including at least one emitter (7), such as a filament, panel or the like, emitting infrared radiation (9) at an operative temperature of at least 600 °C and at most 3000 °C, wherein the at least one radiator module (5, 6) having a power output density of at least 10 kW/m² and/or at most 300 kW/m², wherein the at least one radiator module (5, 6) is arranged at a distance of 50 mm to 500 mm relative to the cushioning product (3a, 3b, 3c), and the at least one radiator module (5, 6) comprises two radiator modules, one of which is arranged above the cushioning product (3a, 3b, 3c) and the other below the cushioning product (3a, 3b, 3c); and
(b) a conveyor (11) for moving the cushioning product (3a, 3b, 3c) relative to the at least one radiator module (5, 6).

2. System (1) according to claim 1, wherein the at least one emitter (7) has a peak wavelength between 0.8 µm and 4.0 µm, in particular 2.0 µm to 3.5 µm.

3. System (1) according to one of the preceding claims, wherein the at least one radiator module (5, 6) is arranged at a of 100 mm to 200 mm, more particularly 150 mm, relative to the cushioning product (3a, 3b, 3c),.

4. System (1) according to one of the preceding claims, wherein the conveyor (11) is a belt conveyor (13), more particularly an open-meshed belt conveyor.

5. System (1) according to one of the preceding claims, comprising a controller (15) for controlling the dose of radiation (9) caused to the cushioning product (3a, 3b, 3c) by the at least one radiator module (5, 6).

6. System (1) according to claim 5, wherein the controller (15) is configured for setting a movement speed of the cushioning product (3a, 3b, 3c) relative to the at least one radiator module (5, 6) and/or for setting a radiation (9) output of the at least one radiator module (5, 6).

7. System (1) according to claim 5 or 6, comprising a temperature sensor (17), particularly a surface temperature sensor (17) and/or an air temperature sensor (17), the controller (15) being operatively coupled to the temperature sensor (17) for controlling the dose of radiation (9) caused to the cushioning product (3a, 3b, 3c) by the at least one radiator module (5, 6) based on the sensed surface and/or air temperature.

8. System (1) according to one of the preceding claims, wherein a shut-off trigger (16) causes the radiator module (5, 6) to cease irradiating the cushioning product (3a, 3b, 3c) within 10 seconds or less, in particular 5 seconds or less, more particularly 2 seconds or less.

9. Arrangement (2) comprising a multi-layered cushioning product (3a, 3b, 3c) including at least one web layer and at least one layer comprising a water-based heat-expandable adhesive (WBHEA) and a System (1) according to one of the preceding claims.

10. Operating method for a System (1) for expanding a multi-layered cushioning product (3a, 3b, 3c) including at least one web layer and at least one expandable layer including a water-based heat-expandable adhesive (WBHEA), **characterized in that** the cushioning product (3a, 3b, 3c) is irradiated by an infrared radiator module (5, 6) including at least one emitter (7), such as a filament, panel or the like, emitting infrared radiation (9) at an operative temperature of at least 600 °C and at most 3000 °C, wherein the cushioning product (3a, 3b, 3c) is provided with no less than 10 mJ/cm² and no more than 50 mJ/cm² for causing expansion of the WBHEA in the expandable layer, and wherein the cushioning product (3a, 3b, 3c) is conveyed relative to the radiator module (5, 6) through a treatment zone (21) irradiated by the at least one radiator module (5, 6) for a dwell time of 1 to 10 seconds, and wherein the at least one radiator module (5, 6) comprises two radiator modules, and the cushioning product (3a, 3b, 3c) is irradiated by a radiator module arranged above it and by a radiator module arranged below it.

11. Operating method of claim 10, wherein radiation (9) is provided to the cushioning product (3a, 3b, 3c) at a wavelength of at least 0.7 µm and at most 5.0 µm; particularly peak wavelength between 2.0 µm and 4.0 µm, in particular 3.0 µm ±0.5 µm.

12. Operating method of claim 10 or 11, wherein the at least one radiator module (5, 6) is operated with a power output density of at least 10 kW/m² and/or at most 150 kW/m², particularly 30 kw/m² to 50 kW/m².

13. Operating method of claim 12, wherein the at least one radiator module (5, 6) may be run at a first conveying power output level during a start-up mode an at a second conveying power output level during a continuous mode, wherein the second conveying power output level is lower than the first conveying power output level.

14. Operating method of one of the claims 10 to 13, wherein the cushioning product (3a, 3b, 3c) is heated to a peak temperature of at least 80°C, in particular at least 90 °C, and/or at most 160 °C, in particular at most 140 °C.

15. Operating method of one of the claims 10 to 14, wherein the cushioning product (3a, 3b, 3c) is irradiated for 1 to 10 seconds, particularly 4 to 8 seconds, more particularly 5 to 6 seconds.

16. Operating method of one of the claims 10 to 15, wherein the cushioning product (3a, 3b, 3c) is conveyed relative to the radiator module (5, 6) through the treatment zone (21) irradiated by the at least one radiator module (5, 6) for a dwell time of 5 to 6 seconds, and/or at a particularly continuous conveying speed of at least 5 mm/s and/or at most 20mm/s.

17. Operating method of claim 16, wherein a conveyor (11) for conveying the product (3a, 3b, 3c) relative to the radiator module (5, 6) is run at a first conveying speed during a start-up mode an at a second conveying speed during a continuous mode, wherein the second conveying speed is faster than the first conveying speed.

18. Operating method of one of the claims 10 to 17, wherein the cushioning product (3a, 3b, 3c) is held at a distance of 50 mm to 500mm, in particular of 100 mm to 200mm, more particularly 150mm, relative to the at least one radiator module (5, 6).

19. Operating method of one of the claims 10 to 18, wherein in a shut-off mode, the at least one radiator module (5, 6) is caused to cease irradiating the cushioning product (3a, 3b, 3c) within 10 seconds or less, in particular 5 seconds or less, more particularly 2 seconds or less.

## Patentansprüche

1. System (1) zur Behandlung eines mehrschichtigen Polsterprodukts (3a, 3b, 3c), das mindestens eine Gewebeschicht und mindestens eine expandierbare Schicht mit einem wärmeexpandierbaren Klebstoff auf Wasserbasis (WBHEA) umfasst, **dadurch gekennzeichnet, dass** es Folgendes umfasst
(a) mindestens ein Strahlermodul (5, 6) zur Bestrahlung des mehrschichtigen Polsterprodukts (3a, 3b, 3c), das mindestens einen Emitter (7), wie beispielsweise einen Faden, eine Kachel oder dergleichen, enthält, der Infrarotstrahlung (9) bei einer Betriebstemperatur von mindestens 600°C und höchstens 3000°C emittiert, wobei das mindestens eine Strahlermodul (5, 6) eine Leistungsausgangsdichte von mindestens 10 kW/m² und/oder höchstens 300 kW/m² aufweist, wobei das mindestens eine Strahlermodul (5, 6) in einem Abstand von 50 mm bis 500 mm zu dem Polsterprodukt (3a, 3b, 3c) angeordnet ist, und das mindestens eine Strahlermodul (5, 6) zwei Strahlermodule umfasst, von denen eines oberhalb des Polsterprodukts (3a, 3b, 3c) und das andere unterhalb des Polsterprodukts (3a, 3b, 3c) angeordnet ist; und
(b) einen Förderer (11) zum Bewegen des Polstermaterials (3a, 3b, 3c) relativ zu dem mindestens einen Strahlermodul (5, 6).

2. System (1) nach Anspruch 1, wobei der mindestens eine Emitter (7) eine Peak-Wellenlänge zwischen 0,8 µm und 4,0 µm, insbesondere 2,0 µm bis 3,5 µm, aufweist.

3. System (1) nach einem der vorhergehenden Ansprüche, wobei das mindestens eine Strahlermodul (5, 6) in einem Abstand von 100 mm bis 200 mm, insbesondere 150 mm, zum Polsterprodukt (3a, 3b, 3c) angeordnet ist.

4. Anlage (1) nach einem der vorhergehenden Ansprüche, wobei der Förderer (11) ein Bandförderer (13), insbesondere ein offenmaschiger Bandförderer, ist.

5. System (1) nach einem der vorhergehenden Ansprüche, mit einem Regler (15) zur Steuerung der durch das mindestens eine Strahlermodul (5, 6) auf das Polsterprodukt (3a, 3b, 3c) einwirkenden Strahlungsdosis (9).

6. System (1) nach Anspruch 5, wobei die Steuerung (15) zur Einstellung einer Bewegungsgeschwindigkeit des Polsterprodukts (3a, 3b, 3c) relativ zu dem mindestens einen Strahlermodul (5, 6) und/oder zur Einstellung einer Strahlungsleistung (9) des mindestens einen Strahlermoduls (5, 6) ausgebildet ist.

7. System (1) nach Anspruch 5 oder 6, umfassend einen Temperatursensor (17), insbesondere einen Oberflächentemperatursensor (17) und/oder einen Lufttemperatursensor (17), wobei die Steuerung (15) mit dem Temperatursensor (17) operativ gekoppelt ist, um die Strahlungsdosis (9), die durch das mindestens eine Strahlermodul (5, 6) auf das Polsterprodukt (3a, 3b, 3c) einwirkt, basierend auf der erfassten Oberflächen- und/oder Lufttemperatur zu steuern.

8. System (1) nach einem der vorhergehenden Ansprüche, wobei ein Abschaltauslöser (16) bewirkt, dass das Strahlermodul (5, 6) die Bestrahlung des Polsterprodukts (3a, 3b, 3c) innerhalb von 10 Sekunden oder weniger, insbesondere 5 Sekunden oder weniger, insbesondere 2 Sekunden oder weniger, beendet.

9. Anordnung (2), umfassend ein mehrlagiges Polsterprodukt (3a, 3b, 3c) mit mindestens einer Gewebeschicht und mindestens einer Lage, die einen wärmeexpandierbaren Klebstoff auf Wasserbasis (WBHEA) umfasst, und ein System (1) nach einem der vorhergehenden Ansprüche.

10. Betriebsverfahren für ein System (1) zum Expandieren eines mehrschichtigen Polsterprodukts (3a, 3b, 3c), das mindestens eine Gewebeschicht und mindestens eine expandierbare Schicht mit einem wärmeexpandierbaren Klebstoff auf Wasserbasis (WBHEA) umfasst, **dadurch gekennzeichnet, dass** das Polsterprodukt (3a, 3b, 3c) von einem Infrarot-Strahlermodul (5, 6) bestrahlt wird, das mindestens einen Emitter (7), wie etwa einen Faden, eine Kachel oder dergleichen, enthält, der Infrarot-Strahlung (9) bei einer Betriebstemperatur von mindestens 600°C und höchstens 3000°C aussendet, wobei das Polsterprodukt (3a, 3b, 3c) mit nicht weniger als 10 mJ/cm² und nicht mehr als 50 mJ/cm² beaufschlagt wird, um eine Ausdehnung des WBHEA in der expandierbaren Schicht zu bewirken, und wobei das Polsterprodukt (3a, 3b, 3c) relativ zu dem Strahlermodul (5, 6) durch eine Behandlungszone (21) befördert wird, die von dem mindestens einen Strahlermodul (5, 6) für eine Haltedauer von 1 bis 10 Sekunden bestrahlt wird, und wobei das mindestens eine Strahlermodul (5, 6) zwei Strahlermodule umfasst, und das Polsterprodukt (3a, 3b, 3c) von einem darüber und einem darunter angeordneten Strahlermodul bestrahlt wird.

11. Betriebsverfahren nach Anspruch 10, wobei die Strahlung (9) dem Polsterprodukt (3a, 3b, 3c) mit einer Wellenlänge von mindestens 0,7 µm und höchstens 5,0 µm zugeführt wird, insbesondere mit einer Spitzenwellenlänge zwischen 2,0 µm und 4,0 µm, insbesondere 3,0 µm ± 0,5 µm.

12. Betriebsverfahren nach Anspruch 10 oder 11, wobei das mindestens eine Strahlermodul (5, 6) mit einer Leistungsdichte von mindestens 10 kW/m² und/oder höchstens 150 kW/m², insbesondere 30 kw/m² bis 50 kW/m², betrieben wird.

13. Betriebsverfahren nach Anspruch 12, wobei das mindestens eine Strahlermodul (5, 6) während eines Anfahrmodus mit einer ersten Förderleistungsstufe und während eines Dauerbetriebs mit einer zweiten Förderleistungsstufe betrieben werden kann, wobei die zweite Förderleistungsstufe niedriger ist als die erste Förderleistungsstufe.

14. Betriebsverfahren nach einem der Ansprüche 10 bis 13, wobei das Polsterprodukt (3a, 3b, 3c) auf eine Spitzentemperatur von mindestens 80°C, insbesondere mindestens 90°C, und/oder höchstens 160°C, insbesondere höchstens 140°C, erhitzt wird.

15. Betriebsverfahren nach einem der Ansprüche 10 bis 14, wobei das Polsterprodukt (3a, 3b, 3c) 1 bis 10 Sekunden, insbesondere 4 bis 8 Sekunden, insbesondere 5 bis 6 Sekunden bestrahlt wird.

16. Betriebsverfahren nach einem der Ansprüche 10 bis 15, wobei das Polsterprodukt (3a, 3b, 3c) relativ zu dem Strahlermodul (5, 6) durch die von dem mindestens einen Strahlermodul (5, 6) bestrahlte Behandlungszone (21) für eine Haltedauer von 5 bis 6 Sekunden und/oder mit einer vorzugsweise kontinuierlichen Fördergeschwindigkeit von mindestens 5 mm/s und/oder höchstens 20 mm/s gefördert wird.

17. Betriebsverfahren nach Anspruch 16, wobei ein Förderer (11) zum Fördern des Produkts (3a, 3b, 3c) relativ zum Strahlermodul (5, 6) während eines Startmodus mit einer ersten Fördergeschwindigkeit und während eines kontinuierlichen Modus mit einer zweiten Fördergeschwindigkeit betrieben wird, wobei die zweite Fördergeschwindigkeit schneller ist als die erste Fördergeschwindigkeit.

18. Betriebsverfahren nach einem der Ansprüche 10 bis 17, wobei das Polsterprodukt (3a, 3b, 3c) in einem Abstand von 50 mm bis 500 mm, insbesondere von 100 mm bis 200 mm, insbesondere 150 mm, zu dem mindestens einen Strahlermodul (5, 6) gehalten wird.

19. Betriebsverfahren nach einem der Ansprüche 10 bis 18, wobei das mindestens eine Strahlermodul (5, 6) in einem Abschaltmodus veranlasst wird, die Bestrahlung des Polsterprodukts (3a, 3b, 3c) innerhalb von 10 Sekunden oder weniger, insbesondere 5 Sekunden oder weniger, insbesondere 2 Sekunden oder weniger, zu beenden.

## Revendications

1. Système (1) pour le traitement d'un produit de rembourrage multicouche (3a, 3b, 3c) comportant au moins une couche de voile et au moins une couche expansible comportant un adhésif thermoexpansible à base d'eau (WBHEA), **caractérisé en ce qu'**il comprend
(a) au moins un module de rayonnement (5, 6) destiné à exposer le produit de rembourrage multicouche (3a, 3b, 3c) à un rayonnement, comportant au moins un émetteur (7), tel qu'un filament, un panneau ou similaire, émettant un rayonnement infrarouge (9) à une température fonctionnelle d'au moins 600 °C et d'au plus 3000 °C, dans lequel l'au moins un module de rayonnement (5, 6) présente une densité de sortie de puissance d'au moins 10 kW/m² et/ou d'au plus 300 kW/m², dans lequel l'au moins un module de rayonnement (5, 6) est disposé à une distance de 50 mm à 500 mm par rapport au produit de rembourrage (3a, 3b, 3c), et l'au moins un module de rayonnement (5, 6) comprend deux modules de rayonnement, dont l'un est disposé au-dessus du produit de rembourrage (3a, 3b, 3c) et l'autre est disposé en dessous du produit de rembourrage (3a, 3b, 3c) ; et
b) un transporteur (11) destiné à déplacer le produit de rembourrage (3a, 3b, 3c) par rapport à l'au moins un module de rayonnement (5, 6).

2. Système (1) selon la revendication 1, dans lequel l'au moins un émetteur (7) présente une longueur d'onde maximale entre 0,8 µm et 4,0 µm, en particulier de 2,0 µm à 3,5 µm.

3. Système (1) selon l'une quelconque des revendications précédentes, dans lequel l'au moins un module de rayonnement (5, 6) est disposé à une distance de 100 mm à 200 mm, plus particulièrement de 150 mm, par rapport au produit de rembourrage (3a, 3b, 3c).

4. Système (1) selon l'une quelconque des revendications précédentes, dans lequel le transporteur (11) est un transporteur à courroie (13), plus particulièrement un transporteur à courroie à mailles ouvertes.

5. Système (1) selon l'une quelconque des revendications précédentes, comprenant un dispositif de régulation (15) destiné à réguler la dose de rayonnement (9) occasionnée sur le produit de rembourrage (3a, 3b, 3c) par l'au moins un module de rayonnement (5, 6).

6. Système (1) selon la revendication 5, dans lequel le dispositif de régulation (15) est configuré pour définir une vitesse de déplacement du produit de rembourrage (3a, 3b, 3c) par rapport à l'au moins un module de rayonnement (5, 6) et/ou pour définir un rayonnement (9) délivré en sortie par l'au moins un module de rayonnement (5, 6).

7. Système (1) selon la revendication 5 ou 6, comprenant un capteur de température (17), en particulier un capteur de température de surface (17) et/ou un capteur de température d'air (17), le dispositif de régulation (15) étant couplé de manière fonctionnelle au capteur de température (17) pour réguler la dose de rayonnement (9) occasionnée sur le produit de rembourrage (3a, 3b, 3c) par l'au moins au moins module de rayonnement (5, 6) sur la base de la température détectée de surface et/ou de l'air.

8. Système (1) selon l'une quelconque des revendications précédentes, dans lequel un système de déclenchement de coupure (16) amène le module de rayonnement (5, 6) à stopper l'exposition à un rayonnement du produit de rembourrage (3a, 3b, 3c) pendant 10 secondes ou moins, en particulier pendant 5 secondes ou moins, plus particulièrement pendant 2 secondes ou moins.

9. Ensemble (2) comprenant un produit de rembourrage multicouche (3a, 3b, 3c) comportant au moins une couche de voile et au moins une couche comprenant un adhésif thermoexpansible à base d'eau (WBHEA) et un système (1) selon l'une quelconque des revendications précédentes.

10. Procédé de fonctionnement d'un système (1) d'expansion d'un produit de rembourrage multicouche (3a, 3b, 3c) comportant au moins une couche de voile et au moins une couche expansible comportant un adhésif thermoexpansible à base d'eau (WBHEA), **caractérisé en ce que** le produit de rembourrage (3a, 3b, 3c) est exposé à un rayonnement d'un module de rayonnement infrarouge (5, 6) comportant au moins un émetteur (7), tel qu'un filament, un panneau ou similaire, émettant un rayonnement infrarouge (9) à une température fonctionnelle d'au moins 600 °C et d'au plus 3000 °C, dans lequel le produit de rembourrage (3a, 3b, 3c) est prévu avec plus de 10 mJ/cm² et moins de 50 mJ/cm² pour entraîner l'expansion du WBHEA dans la couche expansible, et dans lequel le produit de rembourrage (3a, 3b, 3c) est transporté par rapport au module de rayonnement (5, 6) à travers une zone de traitement (21) exposée à un rayonnement par l'au moins un module de rayonnement (5, 6) pendant une durée de temporisation de 1 à 10 secondes, et dans lequel l'au moins un module de rayonnement (5, 6) comprend deux modules de rayonnement, et le produit de rembourrage (3a, 3b, 3c) est exposé à un rayonnement par un module de rayonnement disposé au-dessus de celui-ci et par un module de rayonnement disposé sous celui-ci.

11. Procédé de fonctionnement selon la revendication 10, dans lequel le rayonnement (9) est fourni au produit de rembourrage (3a, 3b, 3c) à une longueur d'onde d'au moins 0,7 µm et d'au plus 5,0 µm ; en particulier à une longueur d'onde maximale entre 2,0 µm et 4,0 µm, en particulier de 3,0 µm ± 0,5 µm.

12. Procédé de fonctionnement selon la revendication 10 ou 11, dans lequel l'au moins un module de rayonnement (5, 6) fonctionne avec une densité de sortie de puissance d'au moins 10 kW/m² et d'au plus 150 kW/m², en particulier de 30 kW/m² à 50 kW/m².

13. Procédé de fonctionnement selon la revendication 12, dans lequel l'au moins un module de rayonnement (5, 6) peut être opéré à un premier niveau de sortie de puissance de transport pendant un mode de démarrage, à un deuxième niveau de sortie de puissance de transport pendant un mode continu, dans lequel le deuxième niveau de sortie de puissance de transport est inférieur au premier niveau de sortie de puissance de transport.

14. Procédé de fonctionnement selon l'une quelconque des revendications 10 à 13, dans lequel le produit de rembourrage (3a, 3b, 3c) est chauffé à une température maximale d'au moins 80 °C, en particulier d'au moins 90 °C, et/ou d'au plus 160 °C, en particulier d'au plus 140 °C.

15. Procédé de fonctionnement selon l'une quelconque des revendications 10 à 14, dans lequel le produit de rembourrage (3a, 3b, 3c) est exposé à un rayonnement pendant 1 à 10 secondes, en particulier de 4 à 8 secondes, plus particulièrement de 5 à 6 secondes.

16. Procédé de fonctionnement selon l'une quelconque des revendications 10 à 15, dans lequel le produit de rembourrage (3a, 3b, 3c) est transporté par rapport au module de rayonnement (5, 6) à travers la zone de traitement (21) exposée à un rayonnement par l'au moins un module de rayonnement (5, 6) pendant une durée de temporisation de 5 à 6 secondes, et/ou à une vitesse de transport en particulier continu d'au moins 5 mm/s et/ou d'au plus 20 mm/s.

17. Procédé de fonctionnement selon la revendication 16, dans lequel un transporteur (11) destiné à transporter le produit (3a, 3b, 3c) par rapport au module de rayonnement (5, 6) est opéré à une première vitesse de transport pendant un mode de démarrage et à une deuxième vitesse de transit pendant un mode continu, dans lequel la deuxième vitesse de transport est plus rapide que la première vitesse de transport.

18. Procédé de fonctionnement selon l'une quelconque des revendications 10 à 17, dans lequel le produit de rembourrage (3a, 3b, 3c) est maintenu à une distance de 50 mm à 500 mm, en particulier de 100 mm à 200 mm, plus particulièrement de 150 mm, par rapport à l'au moins un module de rayonnement (5, 6).

19. Procédé de fonctionnement selon l'une quelconque des revendications 10 à 18, dans lequel dans un mode de coupure, l'au moins un module de rayonnement (5, 6) est amené à stopper l'exposition à un rayonnement du produit de rembourrage (3a, 3b, 3c) pendant 10 secondes ou moins, en particulier pendant 5 secondes ou moins, plus particulièrement pendant 2 secondes ou moins.
